# EUROPÄISCHE PATENTANMELDUNG

(11) **EP 1 841 160 A1**
(43) Veröffentlichungstag der Anmeldung: **03.10.2007**
(21) Anmeldenummer: 06405131.1
(22) Anmeldetag: 28.03.2006
(51) Int. Cl.: H04L 29/00, G06Q 30/00

(54) **Verfahren für den Transfer von Daten in einem Telekommunikationssystem und Telekommunikationssystem**

(71) Anmelder: Gmür, Remo, 8330 Cham (CH)
(72) Erfinder: Gmür, Remo, 8330 Cham (CH)
(74) Vertreter: Rutz, Peter

(57) **Zusammenfassung**

Das Verfahren dient dem Transfer von Daten in einem Telekommunikationssystem, das wenigstens ein Telekommunikationsnetz (5, 55) umfasst, an das mobile und oder feste Endgeräte (10, 30) von Anwendern einer ersten und einer zweiten Klasse, insbesondere Abnehmer und Anbietern, angeschlossen sind, mittels derer subjektbezogene und objektbezogene Informationen über das zugehörige Telekommunikationsnetz (5, 55) übertragbar sind. Erfindungsgemäss ist innerhalb des Telekommunikationssystems eine mit einer Datenbank (200) versehene Vermittlungsstelle (20) vorgesehen, der über das zugehörige Telekommunikationsnetz (5, 55) von den Endgeräten (10, 30) der Anwender beider Klassen erste Datensätze mit subjektbezogenen und objektbezogenen Informationen zugeführt werden, die von der Vermittlungsstelle (20) derart miteinander verknüpft werden, dass einander entsprechende Datensätze mit identischem Objektbezug und passendem Subjektbezug für die Anwender beider Klassen resultieren, wonach die Vermittlungsstelle (20) zueinander korrespondierende zweite Datensätze mit subjektbezogenen und objektbezogenen Informationen über das jeweils zugehörige Telekommunikationsnetz (5, 55) an die Endgeräte (10, 30) der durch die einander entsprechenden Datensätze festgelegten Anwender sendet, mittels derer der Aufbau einer direkten Kommunikationsverbindungen zwischen den festgelegten Anwendern möglich ist.

## Beschreibung

Die Erfindung betrifft ein Verfahren für den Transfer von Daten in einem Telekommunikationssystem und ein Telekommunikationssystem nach dem Oberbegriff des Patentanspruchs 1 bzw. 11.

Trotz der Vielseitigkeit und Leistungsfähigkeit heutiger Kommunikationssysteme ist es Anwendern oft nicht möglich temporär benötigte Informationen von weiteren Anwendern dieses Kommunikationssystems zu erhalten, die über die gewünschten Informationen verfügen.

Insbesondere ist es für den Anwender oft nicht möglich sowohl subjektbezogene und als auch objektbezogene Informationen zu erhalten.

Sofern der erste Anwender, beispielsweise ein Abnehmer, den zweiten Anwender, beispielsweise einen Anbieter, bereits kennt, so kann er diesen direkt kontaktieren und befragen. Voraussetzung dafür ist jedoch bereits eine entsprechende Information, nämlich die Kenntnis des Namens und der Adresse des Anbieters. Zudem ist die Kontaktaufnahme mit diesem Anbieter meist nutzlos, weil die gewünschte Information dort meist nicht vorliegt.

Sofern der Abnehmer beispielsweise durch die Werbung auf eine Dienstleistung oder ein Produkt aufmerksam geworden ist und diese Dienstleistung oder das Produkt nutzen bzw. erwerben möchte, liegen ihm diesbezügliche Informationen meist nur fragmentarisch vor, so dass er sich schrittweise zur gewünschten Information vortasten muss und dazu unter Umständen zahlreiche Verbindungen über das Telekommunikationssystem zu zahlreichen Anwendern erstellen muss.

Dabei wird es dem Abnehmer oft gelingen alle objektbezogenen Informationen zu erhalten. Beispielsweise erhält der Abnehmer über das Internet die Information, das gewünschte Produkt sei vom Hersteller in Übersee oder von einem Anbieter im Ausland, in einer entfernten Stadt oder einem anderen Stadtteil erhältlich. Sofern der Abnehmer nicht die Zeit für den Transfer zu diesem Anbieter aufwenden will, ist diese Information für ihn als Subjekt nutzlos.

Der Anwender verliert daher oft wertvolle Zeit mit der Suche nach den benötigten Informationen oder verzichtet grundsätzlich darauf, woraus Nachteile sowohl für den Abnehmer, als auch für die Anbieter resultieren.

Umgekehrt wäre es daher auch für den Anbieter wünschenswert, wenn er subjektbezogene und objektbezogene Informationen gezielt an den interessierten Abnehmer übertragen könnte. Für den Anbieter ist es nämlich ebenso nutzlos Informationen an Abnehmer zu übertragen, die aufgrund der geografischen Distanz an einer Kontaktaufnahme nicht interessiert sind.

Eine gezielte und effiziente Übertragung von subjekt- und objektbezogenen Informationen wäre daher im Interesse sowohl der Abnehmer als auch der Anbieter. Alle Anwender wünschen sich, bei der Realisierung ihrer Vorhaben, die zeitlichen Aufwendungen für eigene Aufwendungen oder zeitlichen Belastungen anderer Anwender zu reduzieren. Beispielsweise will der Abnehmer möglichst wenig Zeit für die Suche nach Informationen aufwenden und mit seiner Suche nach Informationen nicht unnötigerweise andere Anwender belasten. Der Anbieter will insbesondere seinen Aufwand reduzieren, um Informationen an interessierte Abnehmer zu übertragen. Ferner will der Anbieter es vermeiden, nicht interessierte Abnehmer mit nutzlosen und oft störenden Informationen zu belasten.

Der vorliegenden Erfindung liegt die Aufgabe zugrunde, ein Verfahren für den Transfer von Daten in einem Telekommunikationssystem und ein Telekommunikationssystem anzugeben, die es erlauben objektbezogene und subjektbezogene Informationen effizient zu übertragen.

Diese Aufgabe wird mit einem Verfahren und einem Telekommunikationssystem gelöst, welche die in Anspruch 1 bzw. 11 angegebenen Merkmale aufweisen. Vorteilhafte Ausgestaltungen der Erfindung sind in weiteren Ansprüchen angegeben.

Das Verfahren dient dem Transfer von Daten in einem Telekommunikationssystem, das wenigstens ein Telekommunikationsnetz umfasst, an das mobile und oder feste Endgeräte von Anwendern einer ersten und einer zweiten Klasse, insbesondere Abnehmer und Anbietern, angeschlossen sind, mittels derer subjektbezogene und objektbezogene Informationen über das zugehörige Telekommunikationsnetz übertragbar sind.

Erfindungsgemäss ist innerhalb des Telekommunikationssystems eine mit einer Datenbank versehene Vermittlungsstelle vorgesehen, der über das zugehörige Telekommunikationsnetz von den Endgeräten der Anwender beider Klassen erste Datensätze mit subjektbezogenen und objektbezogenen Informationen zugeführt werden. Diese ersten Datensätze werden von der Vermittlungsstelle derart miteinander verknüpft, dass einander entsprechende Datensätze mit identischem Objektbezug und passendem Subjektbezug für die Anwender beider Klassen resultieren. Anschliessend sendet die Vermittlungsstelle zueinander korrespondierende zweite Datensätze mit subjektbezogenen und objektbezogenen Informationen über das jeweils zugehörige Telekommunikationsnetz an die Endgeräte der durch die einander entsprechenden Datensätze festgelegten Anwender. Die zweiten Datensätze erlauben nun anhand der darin vorgesehenen subjektbezogenen Informationen den Aufbau einer direkten Kommunikationsverbindung, beispielsweise per Telefon, e-Mail und/oder Postadresse bzw. die Kontaktaufnahme zwischen den betreffenden Anwendern. Dabei ist es möglich, dass beiden oder nur einem der betreffenden Anwender die für den Aufbau der Kommunikationsverbindung notwendigen Informationen zugestellt werden.

Das erfindungsgemässe Verfahren und das nach dem erfindungsgemässen Verfahren arbeitende Telekommunikationssystem erlauben daher die Verknüpfung von Informationen, durch die Transaktionen zwischen Anwendern der ersten und zweiten Klasse begründet werden können. D.h. durch die Verknüpfung passender Informationen kann bereits eine Transaktion bewirkt oder es können nur die Grundlagen für eine solche Transaktion bereitgestellt werden.

Ein gegebenenfalls dort bereits registrierter Abnehmer (als Anwender der ersten Klasse) kann daher subjektbezogene und objektbezogene Informationen zur Vermittlungsstelle senden, die beispielsweise einen Werbecode oder einen Produktcode enthalten, die zu einem in der Werbung angebotenen Produkt oder einer Dienstleistung korrespondieren. Zusätzlich sendet der Abnehmer einen Subjektcode zur Vermittlungsstelle, der wenigstens eine Kontaktinformation und ein Merkmal des Anwenders, wie dessen Standort oder dessen Bedingungen, aufweist. Der Abnehmer interessiert sich somit für ein Produkt und möchte dieses unter Berücksichtigung seines Standorts und gegebenenfalls unter Berücksichtigung seiner Bedingungen, wie maximale Standortabweichung des Anbieters, Preis, gewünschte Produkteigenschaften, ohne weitere Aufwendungen beschaffen oder prüfen können. Der Abnehmer kann ferner, beispielsweise mittels eines Codeelements erklären, dass er das Produkt kaufen oder nur reservieren möchte, falls seine Bedingungen erfüllt sind.

Beispielsweise sieht der Abnehmer auf dem Weg zur Arbeit ein Werbeplakat mit einer Kleidung, die ihm gefallen würde. Er hat jedoch keine Zeit, ein entsprechendes Geschäft zu suchen, welches das entsprechende Produkt im Sortiment führt.

Insbesondere fehlt ihm die Zeit, Geschäfte ausserhalb seines oder Geschäfte innerhalb seines Standortbereichs zu besuchen, um zu prüfen, ob das Produkt seinen Bedingungen (Grösse, Qualität, Beschaffenheit entspricht. Das erfindungsgemässe Telekommunikationssystem erlaubt ihm nun innerhalb weniger Sekunden, die erforderlichen Informationen hinsichtlich eines Anbieters zu beschaffen, welcher das Produkt zu seinen Bedingungen anbietet und gegebenenfalls den Kauf oder eine Reservation zu bestätigen.

Dazu wird der vom Abnehmer an die Vermittlungsstelle gesandte Datensatz dort mit Datensätzen verknüpft, die ebenfalls subjektbezogene und objektbezogene Informationen aufweisen und die von Anwendern der zweiten Klasse bzw. Anbietern übermittelt und in einer Datenbank gespeichert wurden. Insbesondere enthalten diese Datensätze einen publizierten Werbecode oder Objektinformationen, die einen angebotenen Gegenstand, ein Produkt oder eine Dienstleistung, definieren. Ferner enthalten diese Datensätze einen Subjektcode, der wenigstens die Identifikationsdaten einschliesslich des Standorts dieses Anbieters definiert.

Grundsätzlich kann ein Anbieter nur die in der Werbung angebotenen oder vorzugsweise alle von ihm geführten Waren in der Datenbank der Vermittlungsstelle registrieren, wie dies in den folgenden Tabellen für zwei Anbieter B1 und B2 beispielsweise gezeigt ist:

| Name | C2S-Code | Produkt | EAN | Preis | Anz. | Status |
|---|---|---|---|---|---|---|
| B1 | 1112233 | Uhr NOBLE A | 1234 | 1'200.00 | 8 | 4 res. |
| B1 | - - - - - - - | Uhr NOBLE B | 5678 | 3'635.00 | 3 | 1 res. |
| B1 | 2339875 | | | | | |

| Name | C2S-Code | Produkt | EAN | Preis | Anz. | Status |
|---|---|---|---|---|---|---|
| B2 | 1112233 | Uhr NOBLE A | 1234 | 1'220.00 | 2 | 2 res. |
| B2 | - - - - - - - | Uhr NOBLE B | 5678 | 3'500.00 | 0 | |
| B2 | - - - - - - - | | | | | |

Der C2S-Code ist dabei ein in der Werbung verwendeter Code, der es erlaubt, ein bestimmtes Produkt eindeutig zu identifizieren. Vorzugsweise wird dieser Code durch die Vermittlungsstelle verwaltet, damit Duplikate vermieden werden. Dabei kann ein Global eindeutiger C2S-Code verwendet werden. Möglich ist jedoch auch die Verwendung identischer Gruppen von C2S-Codes, sofern sie an unterschiedliche Adressen der Vermittlungsstelle gesandt werden, die somit eine oder mehrere Adressen aufweisen kann, die beispielsweise verschiedenen Produktebereichen zugeordnet sind.

Der Abnehmer kann nun den in der Werbung publizierten C2S-Code 1112233 für die Uhr vom Typ A an die Vermittlungsstelle senden, welche feststellt, dass diese Uhr von den Anwendern B1 und B2 geführt wird. Zusätzlich zum C2S-Code übermittelt der Abnehmer einen kundenspezifischen Code, beispielsweise die Postleitzahl seines Standorts oder des Orts, an dem er die Ware erwerben möchte. Die Vermittlungsstelle stellt nun fest, dass der Standort des Anbieters B1 passend ist und das gewünschte Produkt verfügbar ist. Ferner stellt die Vermittlungsstelle fest, dass die vorrätigen Waren des Anbieters B2 bereits reserviert sind und dass keine weiteren passenden Anbieter vorhanden sind. Die Vermittlungsstelle sendet daher eine entsprechende Rückmeldung an den Abnehmer mit den Informationen des Anbieters B1.

Sofern das gewünschte Produkt auch beim Anbieter B1 nicht verfügbar ist, überwacht die Vermittlungsstelle vorzugsweise den Reservationsstand des betreffenden Produkts bei den Anbietern B1 und B2 und meldet dem Abnehmer, sobald ein Produkt bei einem der Anbieter B1 oder B2 verfügbar wird. Vorgängig wird dem Anbieter selbstverständlich die fehlende Verfügbarkeit gemeldet.

In einer vorzugsweisen Ausgestaltung, der Erfindung in der nicht nur die in der Werbung angebotenen Waren der Anbieter in der Datenbank der Vermittlungsstelle sind, kann der Abnehmer anstelle des in der Werbung fehlenden C2S-Codes 1112233 auch weitere Informationen über ein gewünschtes Produkt an die Vermittlungsstelle übermitteln. Beispielsweise sieht der Abnehmer auf dem Weg zur Arbeit ein Produkt, für das er sich interessiert. Der Abnehmer kann nun den EAN Code (Europäischer Artikelnummer-Code) (oder auch das Warenzeichen) in sein Mobilendgerät eingeben und an die Vermittlungsstelle senden, welche prüft, ob das gesuchte Produkt bei einem Anbieter gelagert ist und ob die Bedingungen des Abnehmer für diesen Anbieter erfüllt sind.

Sofern eine oder gegebenenfalls mehrere Übereinstimmungen erzielt werden, übermittelt die Vermittlungsstelle einen Datensatz für alle Übereinstimmungen oder nur für die erste oder beste Übereinstimmung an den Abnehmer. Beispielsweise wurde ermittelt, dass die vom Kunden gewünschte Kleidung in der erforderlichen Grösse oder die gewünschte Uhr zu einem akzeptablen Preis in einem Verkaufslokal innerhalb des Standortbereichs des Abnehmers gelagert ist.

Vorzugsweise wird das Produkt, das Gegenstand der übereinstimmenden Datensätze ist reserviert, so dass der Abnehmer das Produkt bei passender Gelegenheit prüfen und kaufen kann.

In einer weiteren vorzugsweisen Ausgestaltung werden Datensätze für Anwender der zweiten Klasse von einem Anwender einer dritten Klasse, wie einem Hersteller oder Grossverteiler, an die Vermittlungsstelle übertragen. Beispielsweise kann ein Grossverteiler an seine Filialen je hundert Stück eines Produkts liefern und dies bei der Vermittlungsstelle entsprechend registrieren lassen.

Hier ist zu beachten, dass der Ort an dem die Produktdaten gespeichert werden, grundsätzlich von untergeordneter Bedeutung ist. Die Daten können zur Vermittlungsstelle übertragen und dort gespeichert werden. Die Vermittlungsstelle kann jedoch auch über ein Netzwerk bedarfsweise auf die Daten eines Anbieters der zweiten oder dritten Klasse zugreifen. Vorzugsweise wird nur eine gemeinsame Produkttabelle geführt, so dass ein andernfalls notwendiger zusätzlicher Synchronisationsaufwand und Sicherungsaufwand entfällt.

Vorzugsweise werden subjektbezogene und objektbezogene Daten, insbesondere Profile der Anwender der ersten und zweiten Klasse, gegebenenfalls nach vorgängiger Authentisierung in der Datenbank der Vermittlungsstelle abgelegt und periodisch oder nach erfolgten Statusänderungen wieder miteinander verknüpft oder ausgewertet. Dadurch können, wie oben beschrieben Statusänderungen, z.B. die Änderungen des Reservationsstandes erfasst und gemeldet werden. Ferner können die gespeicherten Datensätze statistisch ausgewertet um Rückschlüsse für die Werbe- und Marketingtätigkeiten zu erlangen.

Mittels der Übertragung subjektbezogener und objektbezogener Informationen können ferner Transaktionen, wie Kaufabschlüsse und Reservationen, durchgeführt werden, weshalb die Datensätze vorzugsweise gesichert, beispielsweise verschlüsselt oder signiert, zur Vermittlungsstelle übertragen werden.

In einer vorzugsweisen Ausgestaltung kann die Vermittlungsstelle daher Konten für die Anwender der ersten und zweiten Klasse führen, über die abgewickelte Transaktionen abgerechnet werden.

Die in der Datenbank der Vermittlungsstelle gespeicherten Objektinformationen sind durch die Vermittlungsstelle oder durch die Anwender der zweiten Klasse selbst modifizierbar, um Statusdaten der registrierten Gegenstände, wie Stückzahl, Preis, Reservation nachzuführen. Dabei werden die Daten der Anbieter und der Vermittlungsstelle synchronisiert. Es ist jedoch möglich eine gemeinsam genutzt Produktdatei zuführen, die durch die Vermittlungsstelle verwaltet wird.

Die von den Anbietern für die Werbung bestimmten Gegenstände werden vorzugsweise mitsamt dem Werbecode C2S von der Vermittlungsstelle elektronisch auf Publikationsgeräten publiziert. Die Vermittlungsstelle dient in dieser vorzugsweisen Ausgestaltung zusammen mit den Publikationsgeräten daher als Werbekanal für die Anbieter.

In einer weiteren vorzugsweisen Ausgestaltung sind die Publikationsgeräte mit einem Schnittstellenmodul versehen über das der Werbecode C2S beispielsweise mittels elektrischer, optischer oder akustischer Übertragungsmittel zu den Endgeräten der Abnehmer übertragbar ist. Der Abnehmer kann daher auf seinem Mobilendgerät, beispielsweise einem GSM oder UMTS-Endgerät ein entsprechendes Steuerprogramm aufrufen, durch das der Werbecode C2S automatisch empfangen und zur Vermittlungsstelle übertragen werden kann. Das erfindungsgemässe Telekommunikationssystem bildet in dieser vorzugsweisen Ausgestaltung daher für alle publizierten Gegenstände Kommunikationsschlaufen, die durch den Abnehmer durch einen Tastendruck geschlossen werden können, um mit minimalem Aufwand Transaktionen abschliessen zu können. Das erfindungsgemässe Telekommunikationssystem kann dabei beliebig automatisiert werden, so dass nach erfolgtem Tastendruck auch Auslieferung und Verrechnung automatisch erfolgen, und der Abnehmer vollständig entlastet wird.

In den meisten Fällen wird es dem Abnehmer jedoch genügen, wenn mittels der Vermittlungsstelle die Verbindung zu einem passenden Anbieter erstellt und ein gewünschtes Produkt oder eine Dienstleistung reserviert wird. Beispielsweise kann der Abnehmer in einer von ihm gewünschten Region, beispielsweise einer Innenstadt mehrere Reservationen tätigen und die ausgewählten Anbieter zu einer geeigneten Zeit sequentiell besuchen.

Die subjektbezogenen und objektbezogenen Informationen können mittels Meldungen zwischen der Vermittlungsstelle und den Endgeräten der Teilnehmer der ersten Klasse übertragen werden, welche durch die genutzten Telekommunikationsnetze zur Verfügung gestellt werden. Insbesondere sind Kurzmeldungen (SMS/MMS) eines Mobilfunknetzes für die Übertragung der Meldungen oder Datensätze genutzt werden.

Das vorliegende Verfahren und das entsprechende Telekommunikationssystem bieten daher allen beteiligten Anwendern vielfältige Vorteile.

Nachfolgend wird die Erfindung anhand von Zeichnungen näher erläutert. Dabei zeigt:
- Figur 1: ein erfindungsgemässes Telekommunikationssystem mit einer Vermittlungsstelle 20, mittels der objektbezogene und subjektbezogene Informationen gezielt zwischen Anwendern, insbesondere Anbietern und Abnehmer vermittelbar sind;
- Figur 2: das erfindungsgemässe Telekommunikationssystem in einer weiterführenden Ausgestaltung, in der Anwender über beliebige Endgeräte 10f, 10m; 30 und Netzwerke 5, 55 miteinander kommunizieren können;
- Figur 3: das erfindungsgemässe Telekommunikationssystem in einer weiterführenden Ausgestaltung, in der es, gestützt auf die Vermittlungsstelle 20 und unter Vermeidung anderer Publikationskanäle von Anwendern bzw. Anbietern als Publikationssystem verwendet wird; und
- Figur 4: das erfindungsgemässe Telekommunikationssystem in voll automatisierter Ausgestaltung, in der Transaktionen mittels eines Tastendrucks ausgeführt werden.

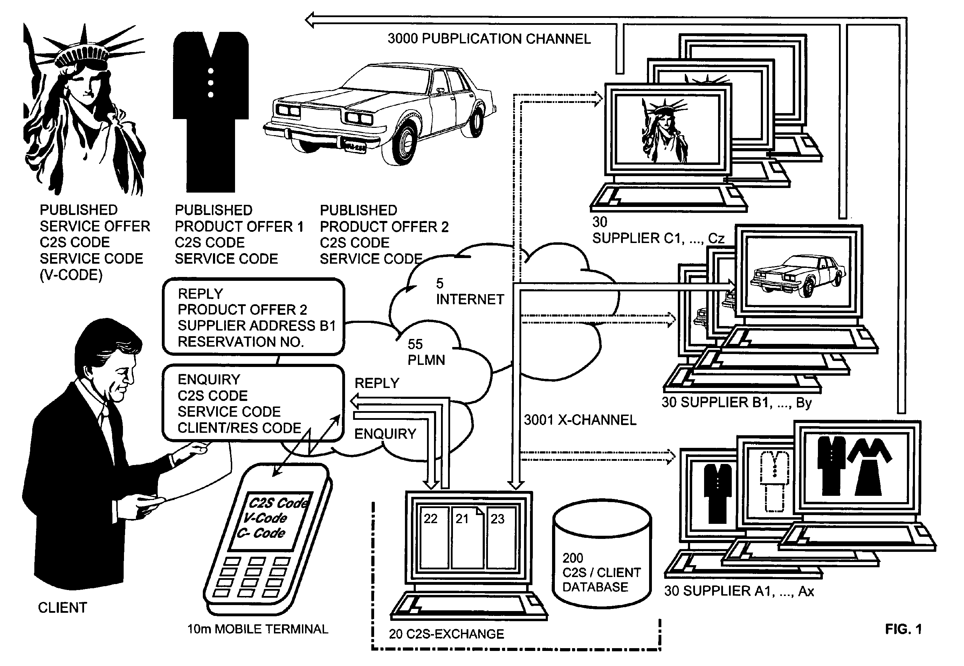

Figur 1 zeigt ein erfindungsgemässes Telekommunikationssystem mit einer Vermittlungsstelle 20 (C2S-EXCHANGE), mittels der objektbezogene und subjektbezogene Informationen gezielt zwischen Anwendern, insbesondere Anbietern und Abnehmer vermittelbar sind.

Insbesondere im Geschäftsverkehr liegen Informationen meist fragmentarisch vor. Beispielsweise werden von Anbietern in der Werbung Dienstleistungen und Produkte offeriert bzw. publiziert, die Abnehmer mit möglichst geringem Aufwand zu ihren eigenen Bedingungen kaufen möchten. Beispielsweise interessiert sich der Abnehmer für eine in einer Zeitschrift vorgestellte oder in einem Inserat dargestellte Uhr, die ihm gefällt. Er könnte nun einen oder mehrere Uhrmachergeschäfte besuchen, um festzustellen, ob die Uhr dort an Lager ist. Er könnte auch ein Uhrmachergeschäft anrufen, um die Uhr zu bestellen. Ferner könnte er die Uhr über das Internet von bekannten Anbietern bestellen, was mit relativ wenig Aufwand verbunden wäre. Wäre in derselben Zeitschrift nun eine Dienstleistung, wie eine Reise nach USA offeriert, für die sich der Abnehmer interessiert, so würde sich der Abnehmer mit einem oder mehreren Reisebüros in Verbindung setzen oder Angebote im Internet prüfen, was auch hier mit einem relativ geringen Aufwand verbunden wäre. Sofern sich der Abnehmer für eine Kleidung und ein Fahrzeug interessiert, die ebenfalls in der Zeitschrift publiziert sind, so würde der Abnehmer beispielsweise anhand von Adressbüchern nach Standorten der entsprechenden Anbieter suchen. Anschliessend würde er diese Anbieter besuchen oder anrufen, um festzustellen, ob das angebotene Produkt zur Probe vorliegt.

Obwohl in Einzelfällen der Aufwand minimal sein kann, resultiert insgesamt bereits für wenige Produktkäufe oder Evaluationen bzw. deren Einleitung ein sehr hoher Aufwand, da für jeden Fall über unterschiedliche Kanäle die entsprechenden Informationen beschafft werden müssen. Selbstverständlich sind die Aufwendungen der Abnehmer individuell verschieden und von verschiedenen Faktoren, insbesondere auch vom Zufall abhängig.

Anhand des erfindungsgemässen Telekommunikationssystems von Figur 1 können diese Aufwendungen fast einheitlich für alle Abnehmer auf ein Minimum reduziert werden.

Spätestens mit der öffentlichen Publikation der Angebote der Produkte und Dienstleistungen werden diese bei der Vermittlungsstelle registriert.

Dazu werden die Anbieter (SUPPLIER A1, ..., Ax; B1, ..., By; C1, ..., Cz) zuerst mit allen relevanten Daten, vorzugsweise Name, Adresse, Ordnungsnummer (z.B. Primary Key, etc.) in der Datenbank 200 der Vermittlungsstelle 20 registriert.

Anschliessend werden für jeden Anbieter bzw. dessen Ordnungsnummer die angebotenen Produkte vorzugsweise mitsamt einem Werbecode (C2S-Code) registriert, wie dies oben beschrieben wurde (siehe Tabelle). Der C2S-Code ist dabei ein in der Werbung verwendeter Code, der es erlaubt, ein bestimmtes Produkt oder Angebot eindeutig zu identifizieren. Der Werbecode kann daher ein reiner Objektcode sein, mittels dessen das angebotene Produkt identifiziert werden kann. Für dasselbe Produkt können jedoch mehrere Werbecodes generiert werden. Beispielsweise können für verschiedene geografische Regionen, für verschiedene Werbeträger oder für verschiedene Zeitperioden unterschiedliche Werbecodes für denselben Gegenstand verwendet werden.

Wie in Figur 1 gezeigt werden die Werbeangebote mit dem Werbecode C2S und mit einem Servicecode oder Vermittlungsstellen-Code (V-Code) publiziert, der normalerweise einer elektronischen Adresse (Rufnummer, e-Mail-Adresse, etc.) der Vermittlungsstelle 20 entspricht.

Der Abnehmer kann nun den Werbecode C2S eines selektierten Gegenstandes in sein mobiles oder fest installiertes Endgerät 10f, 10m übernehmen und in Form einer Meldung bzw. Anfrage (ENQUIRY) an die Vermittlungsstelle 20 senden. Beispielsweise kann er eine Kurzmitteilung SMS/MMS, ein e-Mail, eine Meldung oder Daten auf anderem Weg, wie mittels Instant Messaging oder über eine gesicherte oder ungesicherte Datenverbindung an die Vermittlungsstelle senden. Selbstverständlich ist die Erfindung auch mit allen zukünftig implementierten Meldungssystemen und Datenübertragungssystemen anwendbar. Mit der Meldung (ENQUIRY) werden nebst dem objektbezogene Werbecode C2S auch abnehmerspezifische, subjektbezogene Informationen an die Vermittlungsstelle 20 gesandt. Die elektronische Adresse des Abnehmers ist normalerweise bereits aufgrund des verwendeten Übertragungsprotokolls in der Meldung eingeschlossen. Zusätzlich werden vom Abnehmer zusätzliche Bedingungen in die Meldung eingefügt, die von einem Anbieter erfüllt sein müssen, damit eine Vermittlung diesbezüglicher Informationen erfolgen soll. Anhand des in der Meldung enthaltenen Datensatzes kann die Vermittlungsstelle 20 nun die entsprechenden Datensätze der Anbieter prüfen, die denselben Werbecode C2S aufweisen und die passenden Datensätze verknüpfen (siehe Tabelle):

| Abnehmer | Anbieter B1 | Anbieter B2 | Anbieter B3 |
|---|---|---|---|
| C2S XYZ | C2S XYZ | C2S XYZ/ABC | C2S XYZ |
| Zone PLZ 84XX | PLZ 6300 | PLZ 8420 | PLZ 8000 |
| Farbe rot | rot | rot | blau |
| Preis max. 30k | 29k | 29k | 30k |

Aus der Tabelle geht hervor, dass die objektbezogenen Daten, nämlich die Werbecodes XYZ identisch sind (zur Illustration ist angegeben, dass bei Anbieter B2 der betreffende Gegenstand noch unter dem Werbecode ABC registriert ist. Sofern der Werbecode XYZ für Publikationen in den elektronischen Medien und der Werbecode ABC für Publikationen in den Printmedien verwendet wird, kann die Effizienz dieser Medien direkt bewertet werden. D.h., der Meldungsverkehr mit den Abnehmern bzw. den Anwendern der ersten Klasse und der Vermittlungsstelle liefert wertvolles statistisches Material, das gegebenenfalls die Grundlage für Zahlungen an die Werbeträger bilden kann.

Aus der Tabelle ist weiter ersichtlich, dass Unterschiede hinsichtlich subjektbezogener Informationen bzw. Bedingungen vorliegen. In der Region mit der Postleitzahl 84XX (XX beliebig) befindet sich nur der Anbieter B2, der den selektierten Gegenstand in der gewünschten Farbe (rot) anbieten kann.

Als Antwort auf die Anfrage des Abnehmers sendet die Vermittlungsstelle 20 nun eine Meldung bzw. Antwort (REPLY) mit den Kontaktdaten, vorzugsweise die vollständige Adresse des ermittelten Anbieters B2, an den Abnehmer. In der Antwort kann die Produktofferte detailliert angegeben oder gar ergänzt sein. Sofern der Abnehmer eine Reservation des Gegenstandes gewünscht oder ein Kaufangebot gemacht hat, kann eine Reservationsbestätigung enthalten sein. Bei der Anfrage für eine kostengünstige Uhr wird der Abnehmer aufgrund des geringen Betrages gleich den Kauf des Produkts bestätigen. Bei einem Kleidungsstück erfolgt hingegen typischerweise eine Reservation.

Grundsätzlich kann das erfindungsgemässe Telekommunikationssystem derart ausgestaltet sein, dass jeder Anwender der ersten Klasse, insbesondere jeder Abnehmer eine Meldung, insbesondere ein Kurzmeldung SMS an die Vermittlungsstelle 20 senden kann, welche nach Vergleich der Datensätze des Abnehmer (Anwender der ersten Klasse) und der Datensätze der Anbieter (Anwender der zweiten Klasse), vorzugsweise unabhängig davon, ob passende Datensätze gefunden wurden, eine entsprechend Antwort (REPLY) an den Abnehmer senden.

Mobilfunknetzwerke, wie GSM- oder UMTS-Netze, und IP-Netzwerke sowie Verfahren zur Übertragung von Datensätzen (user data/content) von mit einem solchen Mobilfunknetz verbundenen Mobilfunkendgerät zu einem mit einem IP-Netzwerk bzw. dem Internet verbundenen Endgerät mittels Kurzmeldungen (short messages / SMS) ist in der WO 02/054801 A1 (siehe insbesondere die Figuren 5 und 10) beschrieben, deren Inhalt durch Bezugnahme vollständig in das vorliegende Dokument integriert wird.

Die Anwender der ersten und zweiten Klasse, insbesondere Abnehmer und Anbieter, werden vorzugsweise beide bei der Vermittlungsstelle 20 registriert. Möglicherweise werden den Anwendern Authentisierungsmittel zugeteilt, die sie bei der Ankopplung (Login) an das erfindungsgemässe Telekommunikationssystem oder bei der Übertragung von Meldungen verwenden.

Ferner kann die Vermittlungsstelle 20 für alle Anwender ein Konto führen, zu dessen Lasten die Kosten für ausgeführte Transaktionen oder allfällige Kosten für von der Vermittlungsstelle 20 erbrachte Dienstleistungen abgebucht werden.

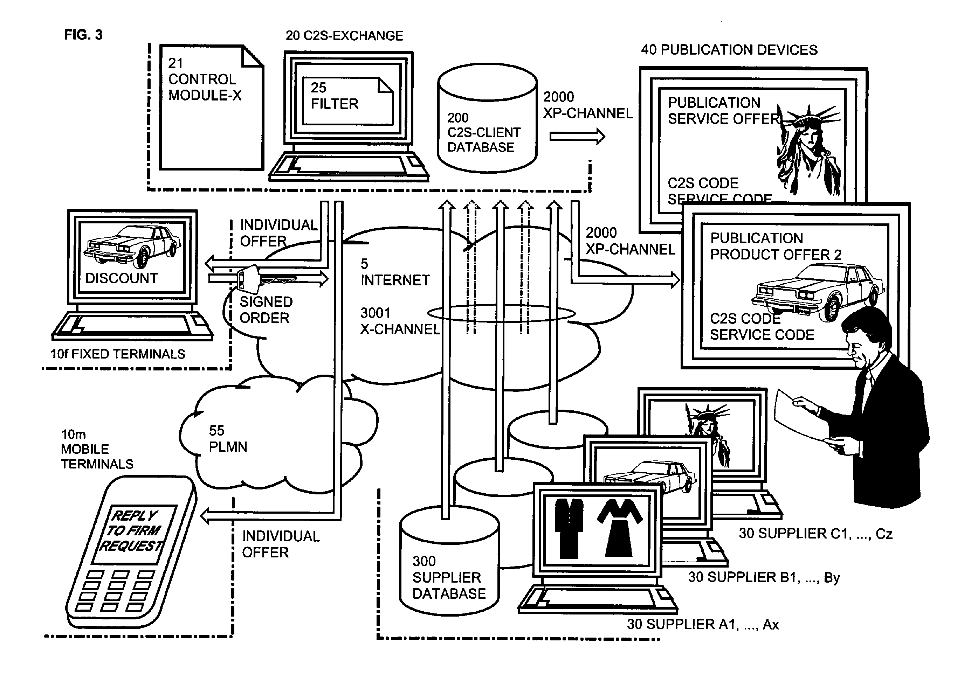

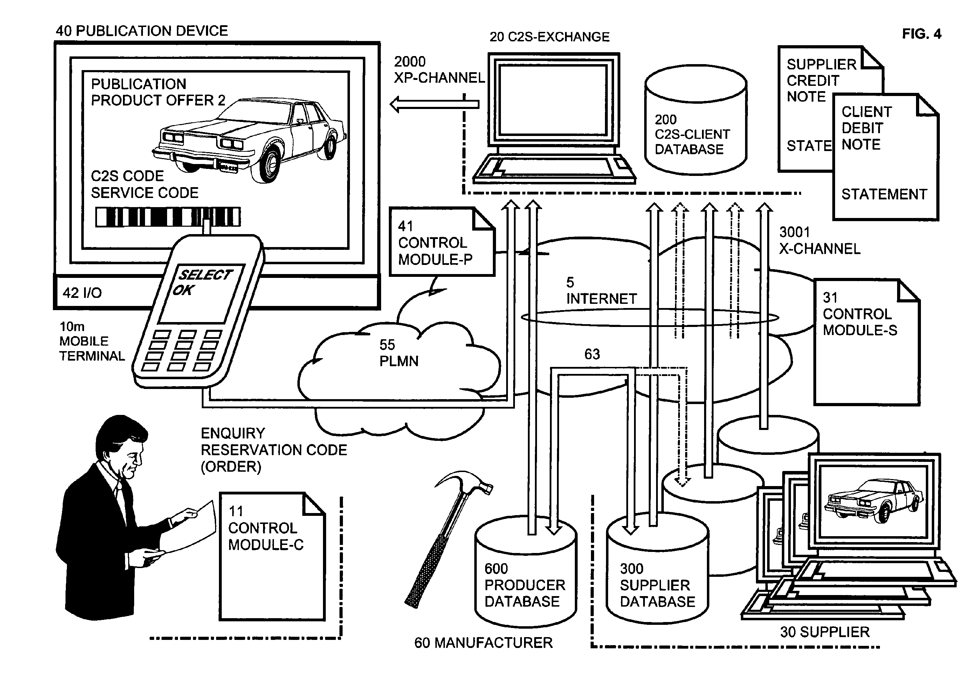

Für registrierte Anwender kann die Vermittlungsstelle auch Steuerprogramme (Control Modules 11, 31) zur Verfügung stellen (siehe die Figuren 3 und 4), mittels derer Kommunikationsprozesse weiter vereinfacht und Funktionen eingeführt werden.

Beispielsweise verwaltet das für die Anwender der ersten Klasse vorgesehene Steuerprogramm 11 vorzugsweise mehrere Templates oder Formulare, von denen eines manuell oder nach Eingabe eines Werbecodes automatisch selektiert wird. Beispielsweise weist der Werbecode einen Header mit einer Ziffer der die Auswahl des Formulars bestimmt. Im vorbereiteten Formular sind Felder vorgesehen die vom Anwender default-mässig gesetzt sind. Die weiteren Felder kann der Anwender manuell ausfüllen, bevor er die Meldung (ENQUIRY) absendet. Beispielsweise sind für das Formular KLEIDERBESTELLUNG, die Grössen oder gewünschten Abmessungen bereits fest programmiert. Das Feld RESERVATION ist vorzugsweise unbelegt und kann vom Anwender noch besetzt werden.

Das für die Endgeräte 10 der Anwender der ersten Klasse vorgesehene Steuermodul 11 kann beispielsweise auch den Transfer von Daten von und zu elektronischen Publikationsgeräten 40 steuern. Beispielsweise kann mittels der Endgeräte 10 ein publizierter Werbecode C2S (beispielsweise ein Bar-Code) gelesen oder Werbecode als Sequenz elektrischer oder akustischer Signale vorzugsweise automatisch abgerufen werden, wie dies in Figur 4 gezeigt ist.

In Figur 1 ist gezeigt, dass der Abnehmer ein Angebot geprüft und den Werbecode C2S, den Adresscode V-Code der Vermittlungsstelle 20 und einen C-Code mit abnehmerspezifischen Informationen (wie Postleitzahl, Produktfarbe, Grösse, Preis, etc.) in sein mobiles Endgerät 10m eingegeben und dieses an die Vermittlungsstelle 20 (20 C2S EXCHANGE) übertragen hat. Als Antwort wurde dem Anwender eine Meldung (REPLY) mit der Adresse des Anbieters, der Produktbeschreibung und einem Reservationscode gesandt. Der Abnehmer (CLIENT) kann daher mit dem Anbieter (SUPPLIER B1) in Kontakt treten und einen Termin für die Prüfung des reservierten Gegenstandes vereinbaren.

In der in Figur 1 gezeigten beispielsweisen Ausgestaltung des Telekommunikationssystems sind ferner Kommunikationskanäle 3001 (X-CHANNEL) eingezeichnet, über die die Vermittlungsstelle 20 und die Endgeräte 30 der Anwender der zweiten Klasse bzw. Anbieter (SUPPLIER A1, ..., Cz) Daten austauschen. Wie oben ausgeführt, können die Anbieter die Daten aller Produkte oder nur die Daten der Produkte abgelegt werden, die sie in der Werbung (elektronische Medien, Kino, Printmedien) über einen Publikationskanal 3000 angeboten haben. Die von den Anbietern übertragenen Daten werden bei der Vermittlungsstelle 20 in der Datenbank 200 gespeichert. Für diese Daten können der Vermittlungsstelle wahlweise Lese- und/oder Schreibberechtigungen zugestellt werden, so dass die Verkaufsphasen, die Angebote und die Transaktionen weitgehend von den Anbietern steuerbar bzw. diesen vorbehalten sind. Dies ist insbesondere dann relevant, wenn die Vermittlungsstelle 20 auf die Datenbanken der Anwender der zweiten und dritten Klasse zugreifen kann. Der Vermittlungsstelle 20 können daher Rechte zugeordnet werden, die es ihr erlauben, nur auf die mit einem Publikationscode-Code versehenen Datensätze zuzugreifen. Möglich ist auch, dass die der Vermittlungsstelle 20 maximale Berechtigungen zugeteilt werden, so dass die Anbieter entlastet werden und die Vermittlungsstelle 20 selbst die Transaktionen selbst abwickelt, d.h. die Anbieter können fest oder flexibel zu Vertriebskanälen reduziert werden. Die Anbieter und die Vermittlungsstelle 20 können dabei eine gemeinsame oder separate Produktlisten verwenden, die bei Bedarf synchronisiert werden.

In Figur 1 ist ferner gezeigt, dass die Vermittlungsstelle 20 über die notwendigen Hardware (Memory 22, Prozessor und Schnittstellenmodule 23) und Softwaremodule (Steuermodul 21) aufweist.

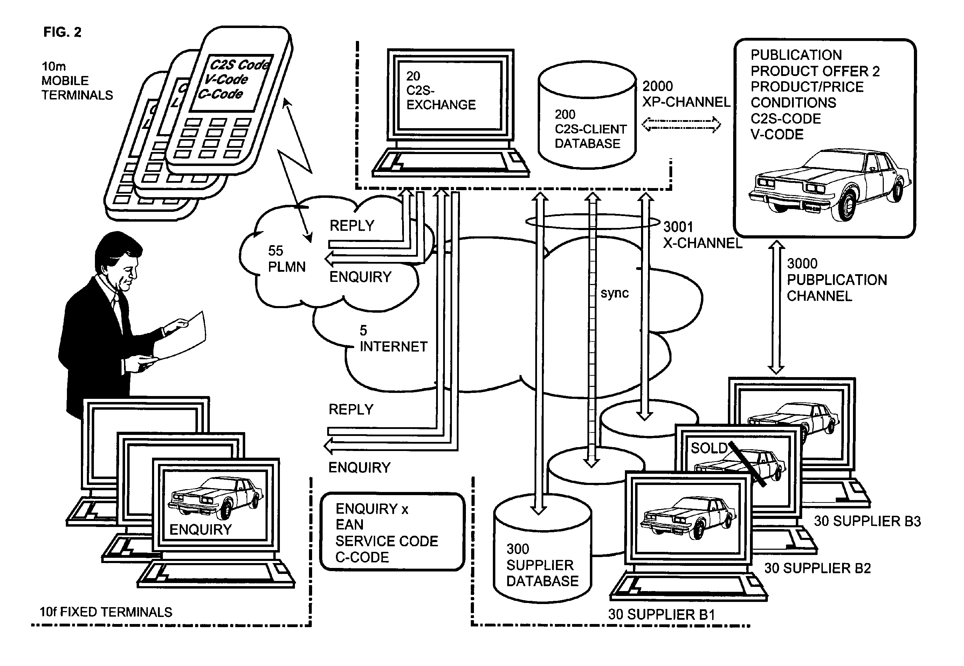

Figur 2 zeigt das erfindungsgemässe Telekommunikationssystem in einer weiterführenden Ausgestaltung, in der Anwender über beliebige Endgeräte 10f, 10m; 30 und Netzwerke 5, 55 miteinander kommunizieren können. Gemäss Figur 2 können die Anwender der ersten Klasse auch mittels fest installierten Endgeräten 10f, beispielsweise über eine Internetverbindung mit der Vermittlungsstelle 20 kommunizieren.

Sofern ein Abnehmer der Vermittlungsstelle 20 mehrere Anfragen (ENQUIRY) gesandt hat, kann die Vermittlungsstelle 20 einen Routenplan, gegebenenfalls sogar einen Zeitplan für den Abnehmer erstellen, in dem die Standorte der ermittelten Anbieter und gegebenenfalls die vereinbarten Besuchstermine aufgeführt sind.

Beispielsweise kann der Abnehmer über eine Zeitperiode von einigen Tagen Werbecodes C2S sammeln und in einem Speicher ablegen. Beispielsweise am Freitagabend kann er nun die Werbecodes C2S sequentiell, vorzugsweise jedoch verknüpft in einem Datensatz an die Vermittlungsstelle 20 senden und als Bedingung setzen, dass die Besuche der Geschäfte für Samstag gewünscht sind. Die Vermittlungsstelle sucht nun für alle Werbecodes C2S die passenden Anbieter und erstellt den Routenplan, gegebenenfalls den Terminplan, nachdem die Reservationen registriert sind. Anhand des Routenplans kann der Abnehmer im Rahmen eines gemütlichen Stadtbesuchs die von ihm gewünschten Einkäufe tätigen.

In Figur 2 ist ferner gezeigt, dass sowohl die Anbieter als auch die Vermittlungsstelle 20 die in der Datenbank 2000 registrierten Gegenstände über symbolische gezeigte Kanäle 2000, 3000 in der Werbung publizieren können. In Figur 2 ist ferner illustriert, dass nach dem Verkauf eines Gegenstandes eine Synchronisation des Inhalts der Datenbank 200 mit dem Inhalt der Datenbank 300 des Anbieters B2 durchgeführt wird.

Sofern Anbieter alle Produktdaten in der Datenbank 200 der Vermittlungsstelle 20 ablegen, ist darin ein enorm breites Produktsortiment enthalten, das einen weiten Bedarf der Abnehmer abdeckt. Anstelle des Werbecodes C2S können Abnehmer nun eine beliebige andere Produktkennzeichnung (z.B. das Warenzeichen oder den EAN-Code (siehe Figur 2, ENQUIRY x) wählen, um festzustellen, ob das gewünschte Produkt bei der Vermittlungsstelle 20 registriert ist und vermittelt werden kann. Somit resultiert durch die Vermittlungsstelle 20 ein doppelter Nutzen für die Abnehmer und Anbieter.

Ein weiterer Nutzen resultiert für die Anbieter, indem die Vermittlungsstelle 20 auch die Werbung und Publikation der registrierten Gegenstände übernimmt, was in Figur 3 nochmals verdeutlicht wird. Die Anbieter können daher mit minimalem Aufwand die Werbekanäle der Vermittlungsstelle 20 nutzen und ihre Produkte selektiv für die Werbung freigeben. Beispielsweise kann ein Anbieter in der von der Vermittlungsstelle 20 verwalteten Produktliste mehrere Produkte zur Publikation freigeben, wonach die Vermittlungsstelle 20 Werbecodes generiert und diese mit den betreffenden Produkten publiziert. Besonders vorteilhaft ist, dass nun die von der Vermittlungsstelle zu belastenden Werbekosten mit der Anzahl der Anfragen von Abnehmern bzw. dem entsprechenden Erfolg der Werbeaktion gewichtet werden kann. Die Anbieter können mit der Vermittlungsstelle 20 einen erfolgsorientierten Werbevertrag abschliessen.

In Figur 3 ist ferner gezeigt, dass basierend auf Anfragen von Abnehmern in der Vermittlungsstelle 20 Filter 25 generiert werden können, mittels derer die registrierten Produkte periodisch abgesucht werden können. Sofern ein Produkt bei Eingang einer Anfrage nicht vorrätig ist, kann zu einem späteren Zeitpunkt geprüft werden, ob die geeigneten Abnehmer dieses (wieder) in ihr Lager aufgenommen haben. Sofern dies bei einer späteren Prüfung der Fall ist, wird dem betreffenden Abnehmer eine Mitteilung mit einer Offerte zugesandt, die dieser annehmen oder ablehnen kann. Sofern der Abnehmer die Offerte akzeptiert, wird die entsprechende Bestellung vorzugsweise mit dem privaten Schlüssel eines PKI (Public Key Infrastructure) Systems signiert.

Figur 4 zeigt das erfindungsgemässe Telekommunikationssystem in voll automatisierter Ausgestaltung, in der Transaktionen mittels eines Tastendrucks ausgeführt werden können. Dabei werden die angebotenen Gegenstände nicht nur in konventioneller Art mit dem Werbecode C2S publiziert, den ein Abnehmer lesen und manuell in sein Endgerät 10 eingeben kann. In der Ausgestaltung von Figur 4 werden die Werbecodes C2S in maschinenlesbarer Art publiziert, wobei das Lesen der entsprechenden Daten, wie gezeigt, optisch, oder mit einer beliebigen anderen Technologie (akustisch, elektrisch, elektromagnetisch, induktiv) erfolgen kann. Das Publikationsgerät 40 verfügt für diesen Fall über eine entsprechende Ausgabeeinheit 42, gegebenenfalls eine als Ein- und Ausgabeeinheit dienende Schnittstelle, die zur Kommunikation mit den entsprechend ausgestalteten Endgeräten 10m der Abnehmer geeignet ist. Beispielsweise kann der gezeigte Bar-Code mittels der Kamera eines Mobilfunkendgerätes 10m erfasst und mittels des Steuerprogramms 11 decodiert werden. Zur Steuerung der Kommunikation mit den Endgeräten 10m der Abnehmer verfügen die Publikationsgeräte 40 über ein Steuermodul 41.

In Figur 4 ist ferner gezeigt, dass Produktdaten auch durch einen Hersteller/Produzenten oder einen Grossverteiler 60 für vertraglich mit ihm verbundene Anbieter in der Datenbank 200 der Vermittlungsstelle 20 abgelegt werden können. Die Daten werden von der Datenbank 600 des Produzenten 60 zur Datenbank 200 der Vermittlungsstelle 20 übertragen. Die diesbezügliche Kommunikation zwischen dem Produzenten 60 und den Anbietern erfolgt über Kommunikationskanäle 63. Nach der Lieferung der Produkte an die Anbieter, können diese die Produkte selektiv für die Werbung und den Verkauf freigeben. D.h., die Anbieter können der Vermittlungsstelle 20 mitteilen, dass die neu gelieferten Produkte in der Werbung, beispielsweise online publiziert werden sollen oder dass die Produkte für die Abnehmer, die entsprechende Werbecodes C2S senden, verfügbar sind und reserviert oder gar direkt verkauft werden können.

## Patentansprüche

1. Verfahren für den Transfer von Daten in einem Telekommunikationssystem, das wenigstens ein Telekommunikationsnetz (5, 55) umfasst, an das mobile und oder feste Endgeräte (10, 30) von Anwendern einer ersten und einer zweiten Klasse, insbesondere Abnehmer und Anbietern, angeschlossen sind, mittels derer subjektbezogene und objektbezogene Informationen über das zugehörige Telekommunikationsnetz (5, 55) übertragbar sind, **dadurch gekennzeichnet, dass** innerhalb des Telekommunikationssystems eine mit einer Datenbank (200) versehene Vermittlungsstelle (20) vorgesehen ist, der über das zugehörige Telekommunikationsnetz (5, 55) von den Endgeräten (10, 30) der Anwender beider Klassen erste Datensätze mit subjektbezogenen und objektbezogenen Informationen zugeführt werden, die von der Vermittlungsstelle (20) derart miteinander verknüpft werden, dass einander entsprechende Datensätze mit identischem Objektbezug und passendem Subjektbezug für die Anwender beider Klassen resultieren, wonach die Vermittlungsstelle (20) zueinander korrespondierende zweite Datensätze mit subjektbezogenen und objektbezogenen Informationen über das jeweils zugehörige Telekommunikationsnetz (5, 55) an die Endgeräte (10, 30) der durch die einander entsprechenden Datensätze festgelegten Anwender sendet, mittels derer der Aufbau einer direkten Kommunikationsverbindung zwischen den festgelegten Anwendern oder eine Kontaktaufnahme möglich ist.

2. Verfahren nach Anspruch 1, **dadurch gekennzeichnet, dass** die von einem Anwender der ersten Klasse an die Adresse (V-Code) der Vermittlungsstelle (20) übermittelten Datensätze
a) einen Werbecode (C2S-Code) oder einen Produktcode enthalten, der einen Gegenstand, ein Produkt oder eine Dienstleistung, definiert, der von wenigstens einem Anwender der zweiten Klasse angeboten werden, und
b) einen Subjektcode (C-Code) enthalten, der wenigstens eine Kontaktinformation und ein Merkmal des Anwenders, wie dessen Standort oder dessen Bedingungen, aufweist.

3. Verfahren nach Anspruch 1 oder 2, **dadurch gekennzeichnet, dass** die von einem Anwender der zweiten Klasse an die Adresse (V-Code) der Vermittlungsstelle (20) übermittelten Datensätze
a) einen Werbecode (C2S-Code) oder Objektinformationen enthalten, die einen angebotenen Gegenstand, ein Produkt oder eine Dienstleistung, definieren, und
b) einen Subjektcode (S-Code) enthalten, der wenigstens die Identifikationsdaten einschliesslich des Standorts dieses Anwenders definiert.

4. Verfahren nach Anspruch 3, **dadurch gekennzeichnet, dass** die Datensätze der Anwender der zweiten Klasse von einem Anwender einer dritten Klasse, wie einem Hersteller oder Grossverteiler (60), an die Vermittlungsstelle (20) übertragen werden.

5. Verfahren nach einem der Ansprüche 1-4, **dadurch gekennzeichnet, dass** subjektbezogene und objektbezogene Daten, insbesondere Profile der Anwender der ersten und zweiten Klasse, gegebenenfalls nach vorgängiger Authentisierung in der Datenbank (200) der Vermittlungsstelle (20) abgelegt und periodisch oder nach erfolgten Statusänderungen wieder miteinander verknüpft oder ausgewertet werden, um zweite Datensätze zu erzeugen, oder um die Vermarktung, insbesondere die elektronische Publikation der angebotenen Gegenstände entsprechend zu steuern.

6. Verfahren nach einem der Ansprüche 1-5, **dadurch gekennzeichnet, dass** mittels der Übertragung subjektbezogener und objektbezogener Informationen Transaktionen, wie Kaufabschlüsse und Reservationen, durchgeführt werden, weshalb zumindest die von den Anwendern der ersten Klasse zur Vermittlungsstelle (20) übertragenen Meldungen vorzugsweise elektronisch verschlüsselt und/oder signiert werden und/oder dass die Vermittlungsstelle (20) für die Anwender der ersten und zweiten Klasse Konten führt, über die die abgewickelten Transaktionen abgerechnet werden.

7. Verfahren nach Anspruch 6, **dadurch gekennzeichnet, dass** die in der Datenbank (200) der Vermittlungsstelle (20) gespeicherten Objektinformationen durch die Vermittlungsstelle (20) oder durch die Anwender der zweiten Klasse selbst modifiziert werden, um Statusdaten der registrierten Gegenstände, wie Stückzahl, Preis, Reservation nachzuführen.

8. Verfahren nach einem der Anspruch 1-7, **dadurch gekennzeichnet, dass** der angebotene Gegenstand mit dem zugehörigen Werbecode (C2S-Code) und vorzugsweise der Adresse (V-Code) der Vermittlungsstelle (20) elektronisch auf Publikationsgeräten (40) durch die Anwender der zweiten oder dritten Klasse oder durch die Vermittlungsstelle (20) publiziert werden.

9. Verfahren nach Anspruch 8, **dadurch gekennzeichnet, dass** der Werbecode (C2S-Code) vorzugsweise mittels elektrischer, optischer oder akustischer Übertragungsmittel von den Publikationsgeräte (40) in die Endgeräte (10m; 10f) der Anwender der ersten Klasse übertragen und dort in die Datensätze eingefügt und zur Vermittlungsstelle (20) übermittelt werden.

10. Verfahren nach einem der Ansprüche 1-9, **dadurch gekennzeichnet, dass** die subjektbezogenen und objektbezogenen Informationen mittels Meldungen, insbesondere Kurzmeldungen (SMS/MMS) eines Mobilfunknetzes (55) und/oder mittels Meldungen eines Festnetzes (5), vorzugsweise des Internets zwischen der Vermittlungsstelle (20) und den Endgeräten (10f, 10m) der Teilnehmer der ersten Klasse übertragen werden.

11. Telekommunikationssystem zur Durchführung des Verfahrens nach einem der Ansprüche 1-9, mit wenigstens einem Telekommunikationsnetz (5, 55), an das mobile und oder feste Endgeräte (10, 30) von Anwendern einer ersten und einer zweiten Klasse, insbesondere Abnehmer und Anbietern, angeschlossen sind, mittels derer subjektbezogene und objektbezogene Informationen über das zugehörige Telekommunikationsnetz (5, 55) übertragbar sind, **dadurch gekennzeichnet, dass** innerhalb des Telekommunikationssystems eine mit einer Datenbank (200) versehene Vermittlungsstelle (20) vorgesehen ist, die geeignet ist über das jeweils zugehörige Telekommunikationsnetz (5, 55) mit den Endgeräten (10, 30) der Anwender beider Klassen erste und zweite Datensätze mit subjektbezogenen und objektbezogenen Informationen auszutauschen, und die über Speichermittel (22), Prozessormittel (23) und ein Steuerprogramm (21) verfügt, mittels derer die ersten Datensätze der Anwender der ersten und zweiten Klasse derart miteinander verknüpfbar sind, dass einander entsprechende Datensätze mit identischem Objektbezug und passendem Subjektbezug für die Anwender beider Klassen resultieren, und mittels derer zueinander korrespondierende zweite Datensätze mit subjektbezogenen und objektbezogenen Informationen generierbar und über das jeweils zugehörige Telekommunikationsnetz (5, 55) an die Endgeräte (10, 30) der durch die einander entsprechenden Datensätze festgelegten Anwender übertragbar sind.

12. Telekommunikationssystem nach Anspruch 11, **dadurch gekennzeichnet, dass** die Endgeräte (10f, 10m; 30) der Anwender der ersten und/oder der zweiten Klasse Steuerprogramme (11) aufweisen, mittels derer Transaktionen steuerbar sind, die zu einer Änderung der Daten, insbesondere der Statusdaten der Gegenstände führen, die in den Datenbanken (200) der Anwender der zweiten Klasse und/oder in der Datenbank der Vermittlungsstelle (20) registriert sind.

13. Telekommunikationssystem nach Anspruch 11 oder 12, **dadurch gekennzeichnet, dass** die zwischen den Endgeräten (10f, 10m; 30) der Anwender der ersten und/oder der zweiten Klasse und der Vermittlungsstelle (20) ausgetauschten Datensätze mittels Meldungen, insbesondere Kurzmeldungen (SMS/MMS) eines Mobilfunknetzes (55) und/oder mittels Meldungen eines Festnetzes (5), vorzugsweise des Internets übertragbar sind; und/oder dass die Vermittlungsstelle (20) und/oder dass zwischen den Endgeräten (30) der Anwender der zweiten Klasse und der Vermittlungsstelle (20) ein gesicherter Übertragungskanal (3001) etablierbar ist, über den Datensätze in die Datenbank (200) der Vermittlungsstelle (20) oder in die Datenbanken (300) der Anwender der zweiten Klasse einschreibbar sind.

14. Telekommunikationssystem nach Anspruch 10, 11 oder 12, **dadurch gekennzeichnet, dass** die Vermittlungsstelle (20) über ein zugehöriges Telekommunikationsnetz (5) mit Publikationsgeräten (40) verbunden ist, die mittels des Steuerprogramms derart steuerbar sind, dass darauf angebotene Gegenstände und ein zugehöriger Werbecode (C2S-Code) oder einen Produktcode und vorzugsweise die Adresse (V-Code) der Vermittlungsstelle (20) publiziert werden kann.

15. Telekommunikationssystem nach Anspruch 14, **dadurch gekennzeichnet, dass** die Publikationsgeräte (40) mit einer Schnittstelleneinheit (42) versehen sind, mittels derer zumindest der Werbecode (C2S-Code) anhand elektrischer, optischer oder akustischer Übertragungsmittel von den Ausgabemodulen (40) in die Endgeräte (10m; 10f) der Anwender der ersten Klasse übertragbar sind.
